# FASCICULE DE BREVET EUROPEEN

(11) **EP 1 126 570 B1**
(45) Date de publication et mention de la délivrance du brevet: **27.05.2009**
(21) Numéro de dépôt: 01400345.3
(22) Date de dépôt: 09.02.2001
(51) Int. Cl.: H02G 3/22

(54) **Adaptateur pour le raccordement de deux conduits de câblage intervenant de part et d'autre d'un fauxplafond**
Adapter zur Verbindung von zwei Kabelrinnen an jeder Seite einer aufgehängten Decke
Adapter for joining two cabling ducts situated on either side of a false ceiling

(30) Priorité: 14.02.2000 FR 0001795
(43) Date de publication de la demande: 22.08.2001
(73) Titulaire: PLANET WATTOHM, 60300 Senlis (FR)
(72) Inventeur: Popescu, Dragos, 93110 Rosny-sous-Bois (FR); Bateson, Gary, Mystic, CT 06355 (US)
(74) Mandataire: Santarelli

(56) Documents cités:
- EP-A- 0 802 364
- DE-U- 9 010 556
- US-A- 5 300 731

## Description

La présente invention concerne d'une manière générale le raccordement l'un à l'autre de deux conduits de câblage intervenant de part et d'autre d'un faux plafond.

Par exemple, et cela est le cas le plus fréquent, le premier de ces conduits de câblage, qui intervient en amont du faux plafond, c'est-à-dire au-dessus de celui-ci, est un tube, qui s'étend à la faveur du vide sus-jacent au faux plafond, et dans lequel cheminent les câbles ou conducteurs électriques nécessaires, et le deuxième conduit de câblage, qui intervient, lui, en aval du faux plafond, c'est-à-dire en dessous de celui-ci, à l'intérieur même du local concerné, est une goulotte, assez communément appelée moulure, qui est destinée à être adossée à l'un des murs de ce local, et qui, s'agissant du cheminement des câbles ou conducteurs électriques, est apte à prendre le relais du tube précédent.

Par goulotte, on entend ici, de manière usuelle, un conduit de câblage comportant, éventuellement d'un seul tenant, d'une part, un socle de section transversale ouverte, et, d'autre part, un couvercle adapté à fermer un tel socle.

La présente invention vise plus précisément le raccordement à faire entre les deux conduits de câblage pour assurer, au mieux, de l'un à l'autre de ceux-ci, toute la continuité souhaitable pour la protection et l'isolation des câbles ou conducteurs électriques.

Plus particulièrement, encore, la présente invention concerne le cas où ce raccordement implique la mise en oeuvre d'un adaptateur comportant, d'une part, un fond, qui, à l'une de ses extrémités, présente une ouverture pour l'engagement d'un premier des conduits de câblage, et à l'autre extrémité duquel l'autre de ces conduits de câblage peut être abouté, ce fond admettant un plan de référence destiné à être disposé au niveau de la face inférieure du faux plafond, et, d'autre part, un capot, qui recouvre au moins pour partie ce fond.

Le document US-A-5 300 731 décrit un adaptateur du genre mentionné ci-dessus.

A ce jour, cet adaptateur intervient intégralement en aval du plan de référence, donc du faux plafond, sous celui-ci.

Il en résulte que le conduit de câblage qui s'étend en amont du faux plafond doit traverser celui-ci, en débouchant ainsi plus ou moins dans le local sous-jacent.

Or, suivant les installations, le tube constituant usuellement ce conduit de câblage a un diamètre plus ou moins grand. Il en découle que l'adaptateur mis en oeuvre, étant adapté au diamètre du tube, peut avoir des dimensions importantes par rapport au conduit situé dans le local, que l'on souhaite en général discret.

Dans certains cas, pour des questions de standardisation, le fond de l'adaptateur mis en oeuvre doit être adapté à recevoir le tube de plus grand diamètre.

Autrement dit, c'est, à ce jour, la dimension transversale du plus grand conduit de câblage envisageable en amont qui impose la dimension à donner au fond de l'adaptateur à mettre en oeuvre.

De ce fait, cet adaptateur, qui intervient intégralement en saillie dans le local à équiper, est assez volumineux, au détriment de l'esthétique, alors même que, pour certaines installations, au moins, ses dimensions peuvent s'avérer inutilement redondantes.

La présente invention a pour objets un adaptateur permettant de minimiser avantageusement cet inconvénient.

Suivant l'invention, on situe l'ouverture du fond de l'adaptateur en amont du plan de référence, donc du faux plafond, ce qui permet d'éviter que le conduit de câblage correspondant doive traverser ce dernier (en tout cas pas en totalité).

Ainsi, seule la partie amont de ce fond doit être adaptée à la plus grande dimension transversale envisageable pour ce conduit de câblage, tandis que sa partie avale, seule visible dans le local concerné, peut, elle, avoir des dimensions plus réduites, et, donc, être plus discrète, au bénéfice de l'esthétique.

Les caractéristiques et avantages de l'invention ressortiront d'ailleurs de la description qui va suivre, à titre d'exemple, en référence aux dessins schématiques annexés sur lesquels :
- la figure 1 est une vue en perspective d'un adaptateur suivant l'invention, représenté en place de part et d'autre d'un faux plafond, avec les câbles ou conducteurs électriques correspondants ;
- la figure 2 est, déduite de la figure 1, une vue en perspective éclatée de l'ensemble, sans les câbles ou conducteurs électriques ;
- la figure 3 est une autre vue en perspective éclatée de l'adaptateur suivant l'invention, représenté isolément ;
- la figure 4 est une vue en perspective éclatée d'une variante de réalisation de l'adaptateur suivant l'invention.

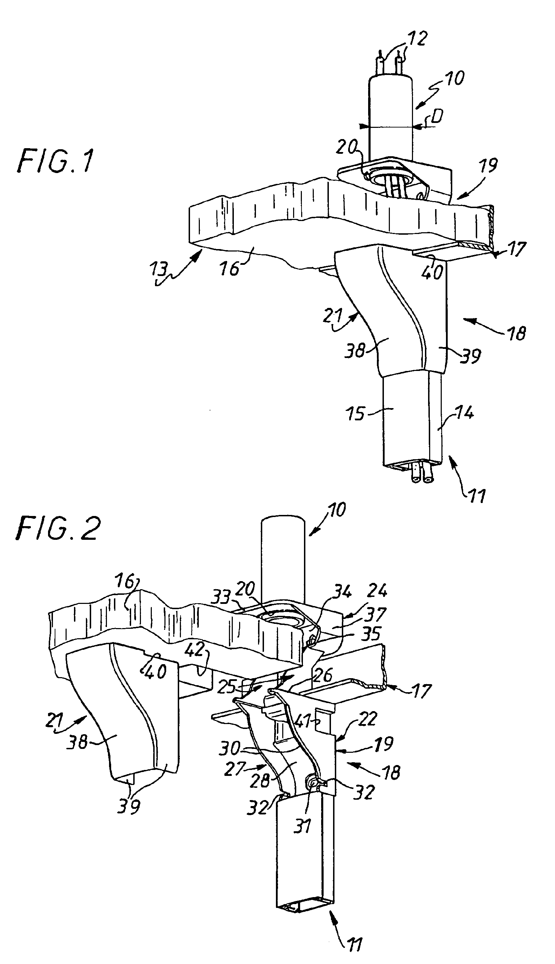

Tel qu'illustré sur les figures 1 et 2, il s'agit d'assurer le raccordement, l'un à l'autre, de deux conduits de câblage 10, 11, qui, destinés au cheminement de câbles ou conducteurs électriques 12, interviennent, chacun respectivement, de part et d'autre d'un faux plafond 13, en s'étendant, l'un, en amont de ce faux plafond 13, et, l'autre, en aval de celui-ci.

Par exemple, et tel que représenté, le conduit de câblage 10 intervenant en amont du faux plafond 13 est un simple tube, de diamètre D qui s'étend plus ou moins librement au-dessus de ce faux plafond 13.

Corollairement, le conduit de câblage 11 qui intervient en aval du faux plafond 13 est, par exemple, et tel que représenté, une goulotte, comportant, de manière usuelle, un socle 14 adapté à être adossé, et fixé, à un mur, non représenté, du local sous-jacent au faux plafond 13, et un couvercle 15 adapté à fermer ce socle 14.

Quant au faux plafond 13, il est formé de plaques 16, qui, par exemple, et tel que représenté, reposent sur l'aile horizontale d'équerres ici continues 17 dûment fixées au mur du local concerné, et auxquelles il sera ci-après systématiquement assimilé.

Les dispositions qui précèdent sont bien connues par elles-mêmes, et, ne relevant pas, en propre, de la présente invention, elles ne seront pas décrites plus en détail ici.

De manière également connue en soi, le raccordement, l'un à l'autre, des deux conduits de câblage 10, 11 implique la mise en oeuvre d'un accessoire spécifique, en l'espèce un adaptateur 18.

En pratique, cet adaptateur 18 comporte, d'une part, un fond 19, qui, à l'une de ses extrémités, et suivant des dispositions décrites plus en détail ultérieurement, présente une ouverture 20 pour l'engagement d'un premier des conduits de câblage 10, 11, en l'espèce le conduit de câblage 10 intervenant en amont du faux plafond 13, et à l'autre extrémité duquel l'autre de ces conduits de câblage 10, 11, en l'espèce le conduit de câblage 11 intervenant en aval du faux plafond 13, peut être abouté, et, d'autre part, un capot 21, qui, suivant des dispositions également décrites plus en détail ultérieurement, recouvre au moins pour partie le fond 19.

Bien entendu, l'ouverture 20 a un diamètre au moins égal au diamètre D du conduit de câblage 10.

En pratique, le fond 19 comporte, de manière concentrique, plusieurs ouvertures 20, dont seule la plus interne est évidée, tandis que les autres ne sont que prédécoupées, et dont la plus externe présente un diamètre adapté au diamètre le plus grand envisageable pour le conduit de câblage 10.

Les dispositions correspondantes étant également bien connues par elles-mêmes, et ne relevant pas de la présente invention, elles ne seront pas non plus décrites plus en détail ici.

En outre, et par mesure de simplicité, on considérera dans ce qui suit que le fond 19 ne comporte qu'une seule ouverture 20.

Suivant l'invention, l'ouverture 20 du fond 19 de l'adaptateur 18 est située en amont d'un plan de référence du fond (défini ci-dessous), destiné à être disposé au niveau de la face inférieure du faux-plafond, de préférence à une distance suffisante de ce plan pour être en amont du faux plafond 13 par rapport à l'extérieur, c'est-à-dire par rapport au local sous-jacent.

Autrement dit on dispose cette ouverture 20 au-dessus du faux plafond 13, dans le vide sus-jacent à celui-ci.

Dans les formes de réalisation représentées, le fond 19 de l'adaptateur 18 comporte, lui-même, sous le plan de référence, un socle 22, par lequel il est apte à être adossé à un mur, ce socle 22 formant à cet effet une surface d'appui 23 sensiblement plane, et, au-dessus du plan de référence, une console 24, qui présente l'ouverture 20, avec, reliant ce socle 22 à cette console 24, au moins un bras de liaison ; ce bras unique (ou l'ensemble des bras s'il y en a plusieurs) n'est pas plus large que le socle.

Par exemple, et tel que représenté, il y a, sensiblement parallèlement l'un à l'autre, deux flancs de liaison 25, qui, établis à distance l'un de l'autre, ont des configurations identiques. Ils forment conjointement un bras de liaison.

Dans les formes de réalisation représentées, les flancs de liaison 25 sont d'un seul tenant avec le socle 22 et la console 24, l'ensemble du fond 19 formant de moulage une seule et même pièce.

Sur une partie au moins de leur longueur entre le socle 22 et la console 24, les flancs de liaison 25 s'étendent de préférence chacun en retrait par rapport à la surface d'appui 23 du socle 22, pour le franchissement de l'aile horizontale (si elle existe localement) de l'équerre 17 correspondante. De manière avantageuse, ce retrait s'étend à partir du socle, à compter de ce dernier.

Plus précisément, encore, dans les formes de réalisation représentées, les bras de liaison 25 comportent, chacun, à leur raccordement au socle 22, en creux sur leur bord le plus proche de la surface d'appui 23 de ce dernier, une encoche 26 par laquelle ils sont aptes à s'engager au moins pour partie sur l'aile en question de l'équerre 17 concernée. Cette encoche longe le plan de référence.

En pratique, dans les formes de réalisation représentées, les flancs de liaison 25 se présentent sous la forme de flasques qui sont raccordés par un fond en sorte de former conjointement un bras de liaison en U qui constitue un canal isolant les fils, en particulier vis-à-vis de l'équerre 17. Ces flancs sont de contour approprié, et ils s'étendent globalement en pont entre le socle 22 et la console 24.

Dans les formes de réalisation représentées, le socle 22 du fond 19 de l'adaptateur 18 suivant l'invention forme globalement une gouttière 27, avec un fond 28 et deux ailes latérales 30, figure 2, et les bras de liaison 25 s'étendent chacun en retrait par rapport aux ailes latérales 30 de cette gouttière 27.

Le plan de référence est ici matérialisé par les tranches supérieures des ailes latérales 30 et/ou les tranches inférieures des flancs 25.

Par exemple, et tel que représenté, le fond 28 de la gouttière 27 est, au moins sur une partie de son parcours, courbe, à la manière d'un toboggan, tout en rejoignant, par une partie plane, à son extrémité, la surface d'appui 23.

Préférentiellement, et tel que représenté, ce fond 28 est, localement, ajouré, dans sa partie plane, d'au moins un perçage 31, pour la fixation du socle 22 au mur auquel il est adossé.

Bien entendu, plusieurs perçages 31 peuvent être prévus de place en place sur le fond 28.

Dans les formes de réalisation représentées, l'une au moins des ailes latérales 30 de la gouttière 27 formée par le socle 22 présente, à son extrémité la plus éloignée de la console 24 associée, au moins une encoche 32, pour le positionnement du capot 21.

En pratique, les ailes latérales 30 de la gouttière 27 présentent chacune, en regard l'une de l'autre, une telle encoche 32.

La console 24, quant à elle, présente, pour l'essentiel, un flasque 33, qui est ajouré de son ouverture 20, et qui s'étend par exemple sensiblement perpendiculairement à la surface d'appui 23 du socle 22, et, donc, sensiblement parallèlement au faux plafond 13.

Dans les formes de réalisation représentées, la console 24 comporte, en outre, à niveau avec la surface d'appui 23 du socle 22, une semelle 34, vis-à-vis de laquelle son flasque 33 s'étend en porte à faux, et par laquelle elle peut, elle aussi, être adossée au mur concerné.

Préférentiellement, et tel que représenté, cette semelle 34 est, elle aussi, évidée localement par au moins un perçage 35, pour la fixation de la console 24 à ce mur.

Par exemple, deux perçages 35 peuvent être prévus à distance l'un de l'autre, parallèlement au flasque 33.

Dans les formes de réalisation représentées, la console 24 comporte, en outre, latéralement, pour son raidissement, deux joues de triangulation 37 (elles servent également à protéger les câbles), qui relient son flasque 33 à sa semelle 34, suivant, éventuellement, un profil qui, au moins localement, est cintré.

Par exemple, et tel que représenté, les bras de liaison 25 se raccordent à la console 24 à l'extrémité de ces joues de triangulation 37, le long de la tranche correspondante de celles-ci.

Dans la forme de réalisation plus particulièrement représentée sur les figures 1 à 3, le capot 21 ne comporte qu'une seule partie, par laquelle il est adapté à ne recouvrir que le socle 22 du fond 19.

Plus précisément, dans cette forme de réalisation, le capot 21 se réduit à une paroi de façade 38, dont le profil suit celui de la gouttière 27 formée par le socle 22, et à deux bords tombés 39, qui s'étendent parallèlement l'un à l'autre, et par lesquels il est apte à encadrer le socle 22 du fond 19.

Préférentiellement, et tel que représenté, les bords tombés 39 présentent, chacun, le long de leur bord le plus proche de la console 24, un décrochement 40, pour leur engagement sur l'aile horizontale de l'équerre 17 concernée.

Préférentiellement, des moyens d'encliquetage sont prévus entre le capot 21 et le socle 22.

Dans les formes de réalisation représentées, ces moyens d'encliquetage impliquent la présence de crans 41 en creux sur la surface externe des ailes latérales 30 de la gouttière 27 formée par le socle 22, et de crans complémentaires, non visibles sur les figures, prévus en correspondance en relief sur la surface interne des ailes latérales 39 du capot 21.

Au montage, c'est-à-dire lors de la mise en place de l'adaptateur 18, il peut, par exemple, être procédé comme suit.

Tout d'abord, on dégage, de l'équerre 17 concernée, la plaque 16 du faux plafond 13 au droit de laquelle l'adaptateur 18 doit être implanté.

On façonne, ensuite, dans cette plaque 16, une encoche 42 propre au passage des flancs de liaison 25 de cet adaptateur 18. De préférence, le capot 21 est de dimension supérieure à l'encoche 42 de manière à masquer l'encoche 42 (plus l'encoche est petite, plus le capot peut être petit).

On fixe alors, sur le mur concerné, le fond 19 de l'adaptateur 18 en utilisant, ou non, l'encoche 26 de ses bras de liaison 25 pour son engagement sur l'aile horizontale de l'équerre 17, et, ainsi, pour son positionnement par rapport à cette équerre 17, et, donc, par rapport à la plaque 16, et/ou en utilisant ou non ses perçages 31 ou 35 pour sa fixation sur le mur correspondant.

Ce faisant, le socle 22 du fond 19 se trouve implanté au-dessous du faux plafond 13 et sa console 24 au-dessus de celui-ci.

On raccorde alors à cette console 24 le conduit de câblage 10, en engageant celui-ci dans l'ouverture 20 correspondante de cette console 24.

Corollairement, on aboute au socle 22 du fond 19 le fond 14 du conduit de câblage 11.

On fait ensuite cheminer, du conduit de câblage 10 au conduit de câblage 11, à la faveur du fond 19, les câbles ou conducteurs électriques 12.

On remet ensuite la plaque 16, en l'engageant, par son encoche 42, sur les bras de liaison 25 du fond 19.

On referme ensuite le conduit de câblage 11, et, enfin, on rapporte, sur le socle 22 du fond 19, le capot 21.

Dans ce qui précède, les câbles ou conducteurs électriques 12 ne sont protégés par le capot 21 qu'en dessous du faux plafond 13.

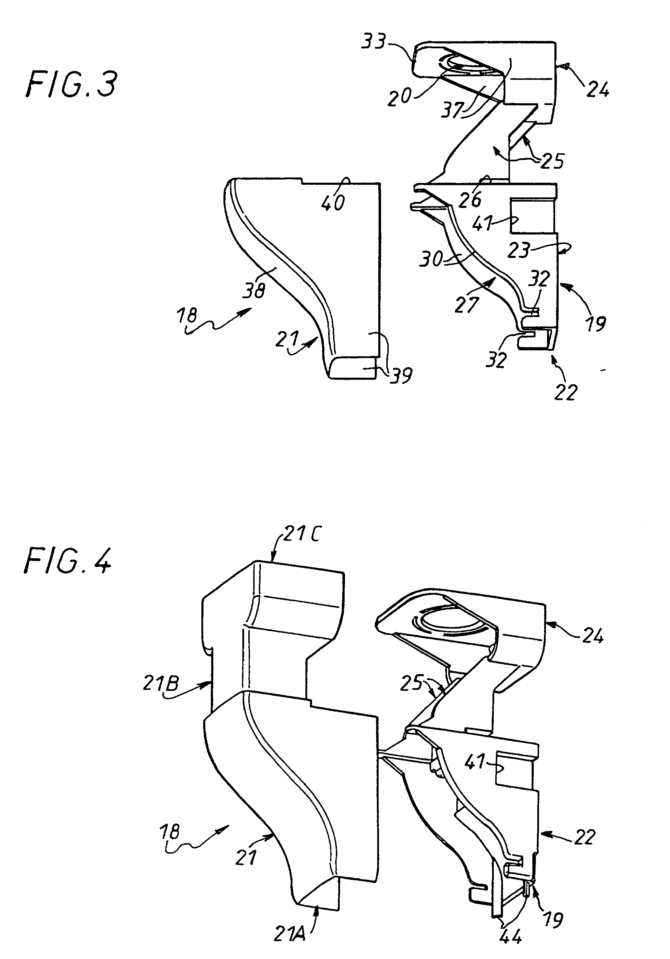

Dans la forme de réalisation représentée sur la figure 4, on fait au contraire en sorte qu'ils soient protégés en continu du conduit de câblage 10 au conduit de câblage 11.

Pour ce faire, on fait traverser le faux plafond 13 par le capot 21 de l'adaptateur 18 pour qu'il recouvre en totalité le fond 19 auquel il est associé.

Par exemple, et tel que représenté sur la figure 4, le capot 21 comporte alors, successivement, trois parties, à savoir, une première partie d'extrémité 21A, par laquelle il recouvre, comme précédemment, le socle 22 du fond 19, une partie intermédiaire 21B, par laquelle il recouvre le ou les bras de liaison 25 de ce fond 19, et une deuxième partie d'extrémité 21C, par laquelle il recouvre sa console 24.

Dans la forme de réalisation représentée, la partie intermédiaire 21B du capot 21 est en retrait par rapport à ses parties d'extrémité 21A, 21C.

En outre, dans cette forme de réalisation (mais cela est valable dans le cas précédent), sont prévus, en saillie en bout du socle 22 du fond 19, à l'extrémité de celui-ci opposé à la console 24, des éperons 44 facilitant le positionnement du conduit de câblage 11 lors de l'implantation de celui-ci en bout de ce fond 19.

Pour le reste, les dispositions sont du même type que celles décrites précédemment.

Bien entendu, la présente invention ne se limite pas aux formes de réalisation décrites et représentées, mais englobe toute variante d'exécution et/ou de combinaison de leurs divers éléments.

Les fentes 26 et 40 liées à la présence d'une équerre 17 (souvent utilisée) ne sont pas indispensables si le faux-plafond n'utilise pas ce type de support ou si cette équerre est localement interrompue (au moins en son aile horizontale).

Par ailleurs, il a été implicitement supposé que le bras de liaison (la pièce en U, ou l'ensemble des flancs 25), qui n'est pas plus large que le socle, était d'une longueur supérieure à l'épaisseur du faux-plafond. Toutefois, cela n'est pas nécessaire car, même si ce bras est plus court que cette épaisseur, il suffit de creuser dans la partie supérieure du faux-plafond une cavité adaptée à recevoir la console, et on a bien l'avantage de l'invention consistant à avoir une encoche 42, dans le faux-plafond qui, au moins à proximité de sa surface inférieure, n'est pas sensiblement plus large que le socle, avantageusement plus étroit que la console.

## Revendications

1. Adaptateur (18) pour le raccordement de deux conduits de câblage (10, 11) intervenant de part et d'autre d'un faux plafond (13), comportant, d'une part, un fond (19), qui à l'une de ses extrémités, présente une ouverture (20) pour l'engagement d'un premier des conduits de câblage (10), et à l'autre extrémité duquel l'autre de ces conduits de câblage (11) peut être abouté, ce fond admettant un plan de référence destiné à être disposé au niveau de la face inférieure du faux plafond, et, d'autre part, un capot (21), qui recouvre au moins pour partie ce fond (19), **caractérisé en ce que** cette ouverture (20) du fond (19) de l'adaptateur est située en amont du plan de référence.

2. Adaptateur suivant la revendication 1, **caractérisé en ce que** le fond (19) comporte, en aval du plan de référence, un socle (22), par lequel il est apte à être adossé à un mur, ce socle (22) formant à cet effet une surface d'appui (23) sensiblement plane, et, en amont de ce plan de référence, une console qui présente l'ouverture 20, avec, reliant ce socle (22) à cette console (24), au moins un bras de liaison (25), ce bras de liaison n'étant pas plus large que le socle.

3. Adaptateur selon la revendication 2, **caractérisé en ce que** le bras de liaison (25) s'étend en retrait par rapport à la surface d'appui (23) du socle (22) sur une partie au moins de sa longueur.

4. Adaptateur suivant la revendication 3, **caractérisé en ce que** le bras de liaison (25) s'étend en retrait par rapport à la surface d'appui (23) du socle (22) sur une partie au moins de sa longueur à compter de ce dernier.

5. Adaptateur suivant l'une quelconque des revendications 2 à 4, **caractérisé en ce que**, à son raccordement au socle (22) le long du plan de référence, le bras de liaison (25) comporte, en creux sur son bord le plus proche de la surface d'appui (23) de ce dernier, une encoche (26).

6. Adaptateur suivant l'une quelconque des revendications 2 à 5, **caractérisé en ce que** le bras de liaison comporte deux flancs (25), sensiblement parallèles l'un à l'autre raccordés ou non par un fond.

7. Adaptateur suivant la revendication 6, **caractérisé en ce que**, le socle (22) formant globalement une gouttière (27), les flancs du bras de liaison (25) s'étendent en retrait par rapport aux ailes latérales (30) de cette gouttière (27).

8. Adaptateur suivant l'une quelconque des revendications 2 à 7, **caractérisé en ce que**, le socle (22) formant globalement une gouttière (27), l'un au moins des ailes latérales (30) de celle-ci présente, à son extrémité la plus éloignée de la console (24) associée, au moins une encoche (32).

9. Adaptateur suivant l'une quelconque des revendications 2 à 8, **caractérisé en ce que** le capot (21) comporte, successivement, trois parties, à savoir une première partie d'extrémité (21A), par laquelle il recouvre le socle (22) du fond (19), une partie intermédiaire (21B), par laquelle il recouvre le bras de liaison (25) de ce fond (19), et une deuxième partie d'extrémité (21C), par laquelle il recouvre sa console (24).

10. Adaptateur suivant la revendication 9, **caractérisé en ce que** la partie intermédiaire (21B) du capot (21) est en retrait par rapport à ses parties d'extrémités (21A, 21C).

11. Adaptateur suivant l'une quelconque des revendications 1 à 10, **caractérisé en ce que** le capot s'étend de part et d'autre du plan de référence et couvre la totalité du fond.

## Claims

1. Adapter (18) for connecting two wiring ducts (10, 11) on respective opposite sides of a suspended ceiling (13), said adapter including a back portion (19) which has an opening (20) at one end for inserting a first one of the wiring ducts (10) and to the other end of which the other one of the wiring ducts (11) can be butt-jointed and a cover portion (21) which at least partly covers said back portion (19), this back portion having a reference plane adapted to be level with the lower face of the suspended ceiling, **characterised in that** said opening (20) in the back portion (19) of the adapter is upstream of the reference plane.

2. Adapter according to claim 1, **characterised in that** the back portion (19) has a base portion (22) downstream of the reference plane adapted to be placed against a wall and to this end defining a substantially plane bearing surface (23), a shelf upstream of said reference plane which incorporates the opening (20) and at least one connecting arm (25) no wider than the base portion and connecting said base portion (22) to said shelf (24).

3. Adapter according to claim 2, **characterised in that** the connecting arm (25) is set back relative to the bearing surface (23) of the base portion (22) over at least part of its length.

4. Adapter according to claim 3, **characterised in that** the connecting arm (25) is set back over at least part of its length relative to the bearing surface (23) of the base portion (22) and starting therefrom.

5. Adapter according to any of claims 2 to 4, **characterised in that** the connecting arm (25) has a notch (26) recessed into its edge nearer the bearing surface (23) of the base portion where this arm joins onto the base portion (22) in the reference plane.

6. Adapter according to any of claims 2 to 5, **characterised in that** the connecting arm includes two substantially parallel members (25) optionally linked by a back portion.

7. Adapter according to claim 6, **characterised in that** the base portion (22) forms a channel (27) and the connecting arm (25) members are set back relative to side flanges (30) of said channel (27).

8. Adapter according to any of claims 2 to 7, **characterised in that** the base portion (22) forms a channel (27) and at least one side flange (30) of said channel has at least one notch (32) at its end farthest away from the associated shelf (24).

9. Adapter according to any of claims 2 to 8, **characterised in that** the cover portion (21) has three successive parts, namely a first end part (21A) covering the base portion (22) of the back portion (19), an intermediate part (21B) covering the connecting arm (25) of said back portion (19) and a second end part (21C) covering its shelf (24).

10. Adapter according to claim 9, **characterised in that** the intermediate part (21B) of the cover portion (21) is recessed relative to its end parts (21A, 21C).

11. Adapter according to any of claims 1 to 10, **characterised in that** the cover portion extends to both sides of the reference plane and covers all of the back portion.

## Patentansprüche

1. Adapter (18) zur Verbindung von zwei beidseits einer abgehängten Decke (13) angeordneten Kabelkanälen (10, 11), einerseits mit einem Boden (19), der an einem Ende eine Öffnung (20) zum Einstecken eines ersten Kabelkanals (10) aufweist, und an dessen anderem Ende der andere Kabelkanal (11) angesetzt werden kann, wobei der Boden eine Bezugsebene aufweist, die dazu bestimmt ist, in Höhe der Unterseite der abgehängten Decke angeordnet zu sein, und andererseits mit einer Abdeckung (21), die den Boden (19) wenigstens zum Teil verdeckt,
**dadurch gekennzeichnet, dass** die Öffnung (20) des Adapterbodens (19) oberhalb der Bezugsebene liegt.

2. Adapter nach Anspruch 1,
**dadurch gekennzeichnet, dass** der Boden (19) unterhalb der Bezugsebene einen Sockel (22) aufweist, durch den er an einer Wand anzuliegen vermag, wobei der Sockel (22) hierzu eine im Wesentlichen ebene Auflagefläche (23) bildet, und oberhalb der Bezugsebene einen Träger, der die Öffnung (20) aufweist, mit wenigstens einem den Sockel (22) mit dem Träger (24) verbindenden Verbindungsarm (25), wobei der Verbindungsarm nicht breiter ist als der Sockel.

3. Adapter nach Anspruch 2,
**dadurch gekennzeichnet, dass** sich der Verbindungsarm (25) über wenigstens einen Teil seiner Länge bezüglich der Auflagefläche (23) des Sockels (22) zurückspringend erstreckt.

4. Adapter nach Anspruch 3,
**dadurch gekennzeichnet, dass** sich der Verbindungsarm (25) über wenigstens einen Teil seiner Länge bezüglich der Auflagefläche (23) des Sockels (22) von diesem ausgehend zurückspringend erstreckt.

5. Adapter nach einem der Ansprüche 2 bis 4,
**dadurch gekennzeichnet, dass** der Verbindungsarm (25) an seiner Verbindungsstelle mit dem Sockel (22) entlang der Bezugsebene als Ausnehmung an seinem der Auflagefläche (23) des Sockels nächstgelegenen Rand einen Einschnitt (26) aufweist.

6. Adapter nach einem der Ansprüche 2 bis 5,
**dadurch gekennzeichnet, dass** der Verbindungsarm zwei im Wesentlichen zueinander parallele Seitenteile (25) aufweist, die durch einen Boden miteinander verbunden sind oder nicht.

7. Adapter nach Anspruch 6,
**dadurch gekennzeichnet, dass** sich die Seitenteile des Verbindungsarms (25), da der Sockel (22) allgemein eine Rinne (27) bildet, bezüglich der Seitenflügel (30) der Rinne (27) zurückspringend erstrecken.

8. Adapter nach einem der Ansprüche 2 bis 7,
**dadurch gekennzeichnet, dass**, da der Sockel allgemein eine Rinne (27) bildet, wenigstens einer von deren Seitenflügeln (30) an seinem von dem zugehörigen Träger (24) am weitesten entfernten Ende wenigstens einen Einschnitt (32) aufweist.

9. Adapter nach einem der Ansprüche 2 bis 8,
**dadurch gekennzeichnet, dass** die Abdeckung (21) aufeinanderfolgend drei Teile umfasst, nämlich ein erstes Endteil (21A), mit dem sie den Sockel (22) des Bodens (19) verdeckt, ein Mittelteil (21B), mit dem sie den Verbindungsarm (25) des Bodens (19) verdeckt, und ein zweites Endteil (21C), mit dem sie den Träger (24) verdeckt.

10. Adapter nach Anspruch 9,
**dadurch gekennzeichnet, dass** der Mittelteil (21B) der Abdeckung (21) bezüglich deren Endteile (21A, 21C) zurückspringt.

11. Adapter nach einem der Ansprüche 1 bis 10,
**dadurch gekennzeichnet, dass** die Abdeckung beidseits der Bezugsebene verläuft und den gesamten Boden abdeckt.
